Europäisches Patentamt

European Patent Office

Office européen des brevets

(11) Publication number: **0 237 244**
**A2**

(12) # EUROPEAN PATENT APPLICATION

(21) Application number: **87301813.9**

(22) Date of filing: **02.03.87**

(51) Int. Cl.³: **F 16 K 3/316**

(30) Priority: **12.03.86 US 839003**

(43) Date of publication of application:
**16.09.87 Bulletin 87/38**

(84) Designated Contracting States:
**DE FR GB**

(71) Applicant: **TRITEN CORPORATION**
**5915 Brittmoore**
**Houston Texas 77240(US)**

(72) Inventor: **Jandrasi, Frank J.**
**6614 Preston Trail Drive**
**Houston Texas 77069(US)**

(74) Representative: **Lucas, Brian Ronald et al,**
**Lucas, George & Co. 135 Westhall Road**
**Warlingham Surrey CR3 9HJ(GB)**

(54) Slide valve.

(57) The accumulation of particulate material on the valve guides (26) of slide valves is inhibited by providing the valve guides (26), and the shelves (34) which support them with slots (36, 38) which allow the particulate material to pass therethrough.

The valve guides (26) may be mounted on their respective valve guides (26) by respective tangs (40) which permit differential expansion between the valve guide (26) and the shelf (34).

FIG.1

## SLIDE VALVE

This invention relates to slide valves and, more particularly but not exclusively, to slide valves capable of handling the flow of solid and semi-solid material which is errosive and/or corrosive in nature.

Slide valves comprise an inlet, an outlet and a valve disc slidably mounted on valve guides. One of the problems with known slide valves is that if they are used to control the flow of a stream containing particulates, the particulates tend to accumulate on the valve guides. These particulates are conventionally removed by purging. However, frequent purging eats away parts of the valve guides and the valve disc.

An aim of at least preferred embodiments of the present invention is to try and reduce this problem.

According to the present invention there is provided a slide valve having an inlet, an outlet and a valve disc slidably mounted on valve guides, characterised in that at least one of said valve guides is provided with at least one slot through which particulate material can fall when said valve is in use.

Preferably, said valve guide comprises a recess and said slot opens into said recess.

Advantageously, said slot extends straight through said valve guide.

Preferably, said valve guide is a continuous integral single member.

Advantageously, at least those portions of said valve guide which slidably receive said valve disc are protected with hardfacing material.

Preferably, slide valves in accordance with the invention include a shelf supporting said said valve guide.

Preferably, said shelf is provided with at least one slot so disposed that particulate material can pass through said valve guide and said shelf.

Advantageously, said valve guide is provided with an indexing tang which locates said valve guide relative to said shelf.

Although the valve guide could be bolted direct to the shelf this could result in distortion due to differential thermal expansion between the valve guide and the shelf. In order to reduce this problem, said valve guide is preferably located on said shelf solely by said indexing tang.

The present invention also provides a valve guide for guiding a valve disc, characterised in that it comprises at least one slot through which particulate material can fall when said valve guide is in use.

For a better understanding of the present invention reference will now be made, by way of example, to the accompanying drawings, in which:-

Figure 1 is a perspective view, partially cut-away, of a slide valve according to the present invention;

Figure 2 is a section taken along line II-II of Figure 1;

Figure 3 is a view taken in the direction of the arrow III in Figure 1;

Figure 4 is a view taken along line IV-IV of Figure 2;

Figure 5 shows, to an enlarged scale and partially in cross-section, the detail encircled in Figure 4;

Figure 6 is a cross-section taken through a second embodiment of a slide valve according to the present invention, the valve stem being omitted;

Figure 7 is a view taken in the direction of the arrow VII in Figure 6;

Figure 8 is a view taken along line VIII-VIII of Figure 6 with the valve disc removed;

Figure 9 is a cross-section taken through a third embodiment of a slide valve according to the present invention, the valve stem being omitted;

Figure 10 is a view taken in the direction of the arrow X in Figure 9;

Figure 11 is a view taken along line XI-XI of Figure 9;

Figure 12 is a cross-section taken through a fourth embodiment of a slide valve according to the present invention;

Figure 13 is a view taken in the direction of the arrow XIII in Figure 12;

Figure 14 is a view taken along line XIV-XIV of Figure 12, but with the valve disc slid into the open position; and

Figure 15 shows, to an enlarged scale, a cross-section of the portion encircled in Figure 1.

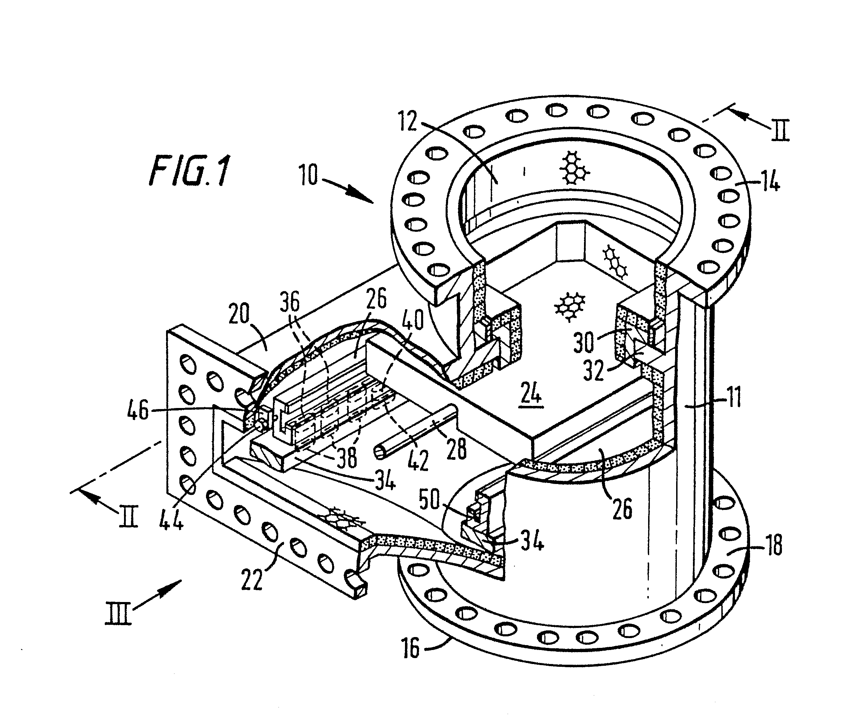

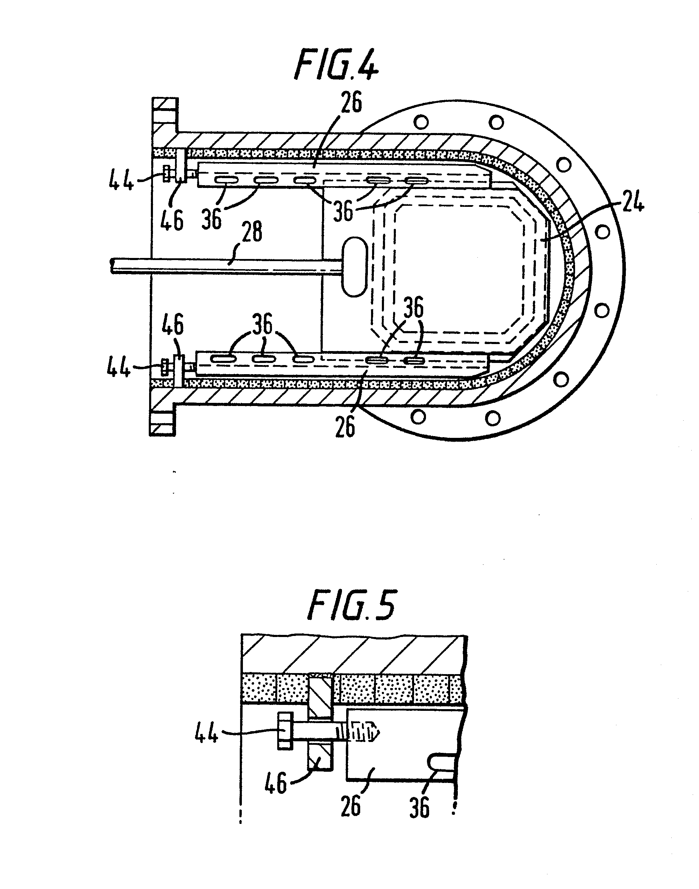

Referring to Figures 1 to 5 and 15 of the drawings, there is shown a slide valve which is generally identified by reference numeral 10. The valve comprises a valve body 11 having an inlet 12, an outlet 16 and a bonnet 20. The inlet 12, outlet 16 and bonnet 20 are provided with flanges 14,18 and 22 respectively. The flanges are attached to the valve body 11 by welding although they could be formed integrally therewith.

A valve disc 24 is slidably mounted on two valve guides 26 which extend internally of the bonnet 20. The valve disc 24 can be slid along the valve guides 26 via a valve stem 28, only part of which is shown.

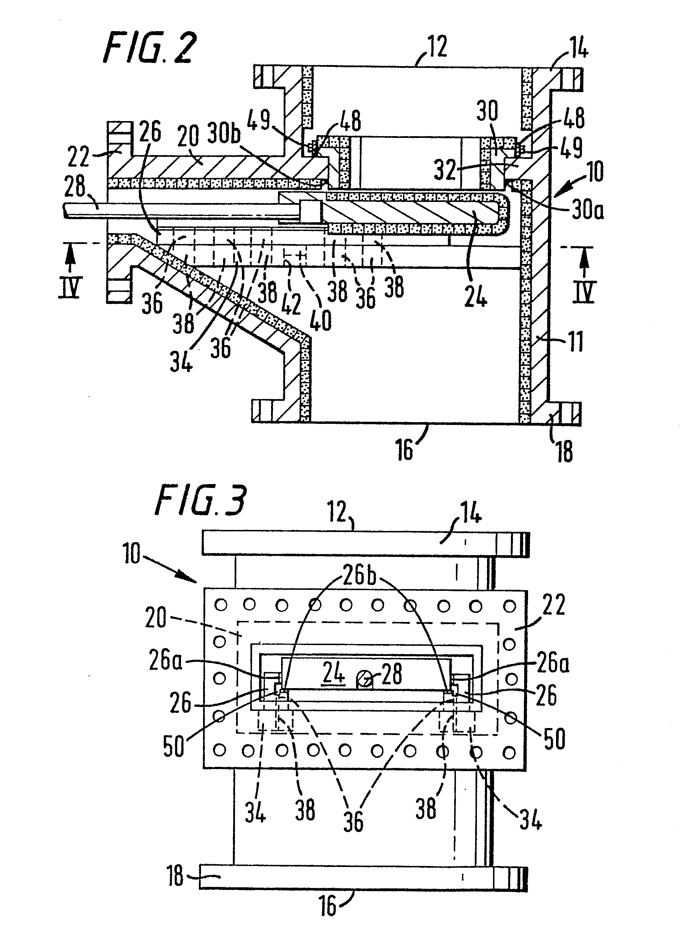

The valve body 11 is provided with an internal rim 32 on which an orifice plate 30 is mounted. The orifice plate 30 is welded to the internal rim 32 by short welds at locations 30a and 30b (Figure 2).

The valve guides 26 are supported by shelves 34 which are welded along their length to the wall of the bonnet 20. The shelves 34 each comprise a unitary member.

The valve guides 26 are provided with a plurality of slots 36 which are aligned with respective slots 38 which extend through the shelf 34.

Each valve guide 26 is provided with an indexing tang 40 (Figure 15) which extends into a recess 42 on its associated shelf 34.

A bolt 44 is screwed into the end of each valve guide 26 and extends through a hole in a positioning plate 46 welded to the interior of the bonnet 20 adjacent its flange 22. This arrangement permits the valve guides 26 to expand and contract relative to their shelves 34.

Four plates 48 are welded to the internal rim 32 circumjacent the orifice plate 30. The orifice plate 30 is secured to these plates 48 by bolts 49 which prevent the orifice plate 30 from disengaging the internal rim 32 if reverse pressure is applied to the orifice plate 30.

Referring now to Figure 3, it will be seen that each valve guide is generally "L" shaped and is provided with a recess 50 which extends the length thereof. Particulates, such as catalyst, which fall on the valve guides 26 move towards the recess 50 and then fall through the slots 36, 38 in the valve guides 26 and the shelves 34. The areas 26a 26b of the valve guides 26 which contact the valve disc 24 are hardfaced to reduce wear (Figure 3).

The internal surfaces of the slide valve 10 are covered in a refractory material retained by "HEX" steel mesh. The internal surface of the valve body 11 is overlaid with 3082 stainless steel to enhance corrosion resistance.

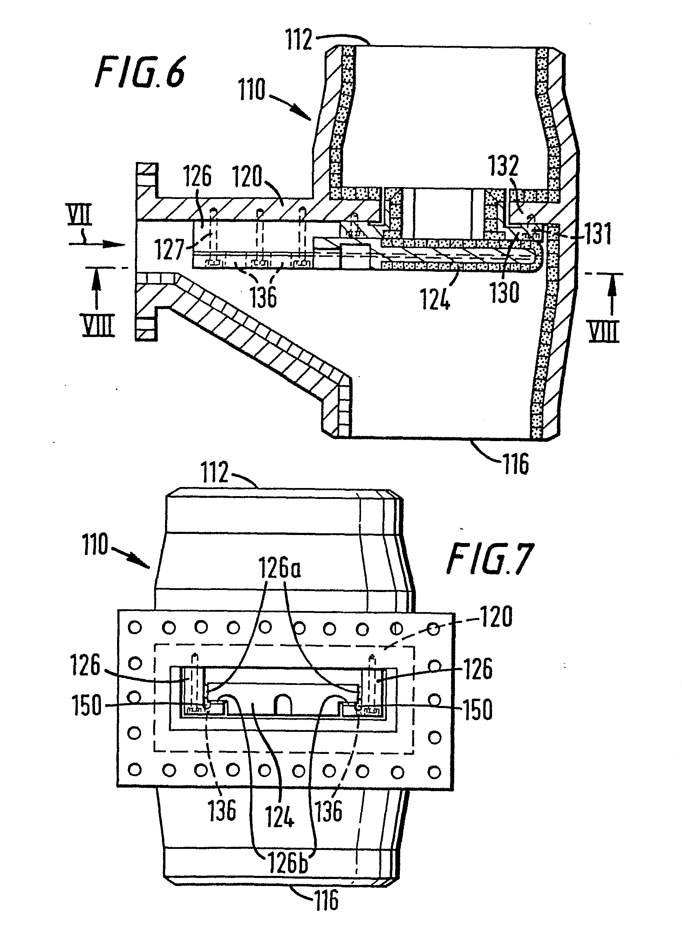

Referring now to Figure 6 to 8, there is shown a slide valve 110 which has an inlet 112, an outlet 116 and a bonnet 120. An orifice plate 130 is bolted from below to the internal rim 132 by a plurality of bolts 131. The valve guides 126 are bolted to the upper part of the bonnet 120 by a plurality of bolts 127 as shown. The valve guides 126 are provided with slots 136 and the areas 126a and 126b are hardfaced to reduce wear caused by the valve disc 124 sliding thereon. Each valve guide 126 has a recess 150 extending therealong for receiving and transmitting particulates.

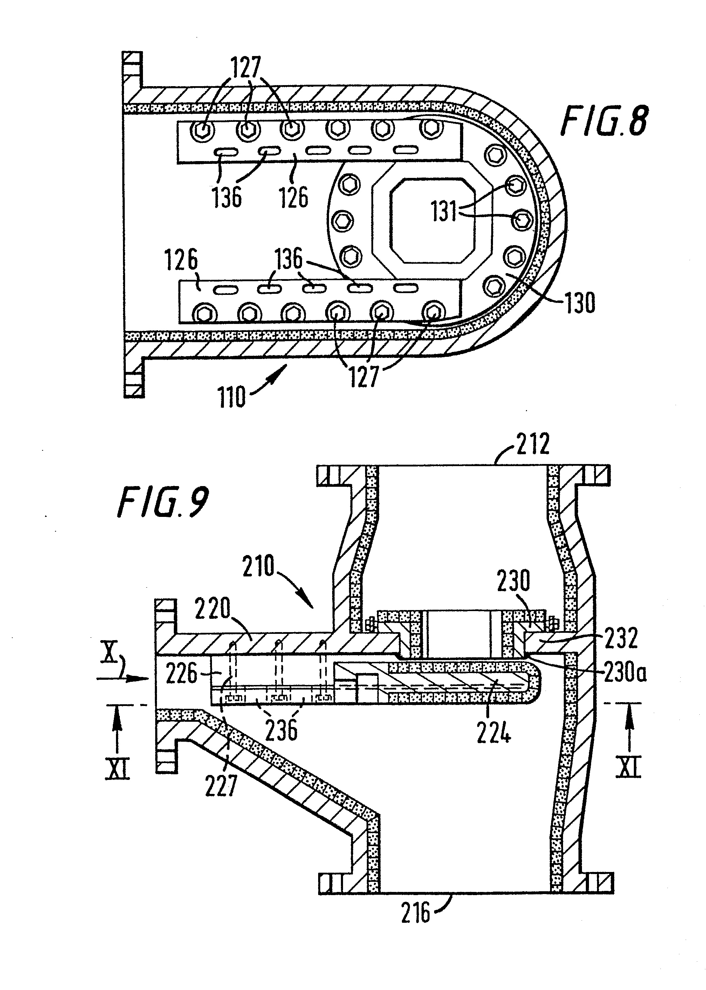

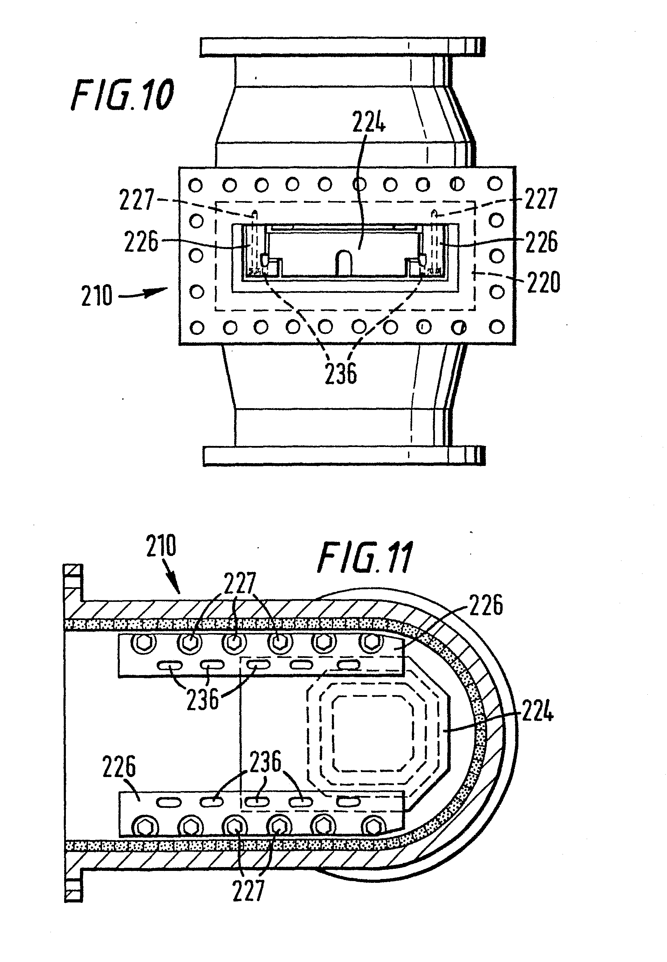

Referring now to Figure 9 to 11, there is shown a slide valve 210 which has an inlet 212, an outlet 216 and a bonnet 220. An orifice plate 230 is

6

0237244

welded from below to the internal rim 232 by a continuous annular weld 230a which obviates the need for a sealing gasket. The valve guides 226 are bolted to the upper part of the bonnet 220 by a plurality of bolts 227 as shown. The valve guides 226 are provided with slots 236 and the areas 226a and 226b are hardfaced to reduce wear caused by the valve disc 224 sliding thereon. Each valve guide 226 has a recess 250 extending therealong for receiving and transmitting particulates.

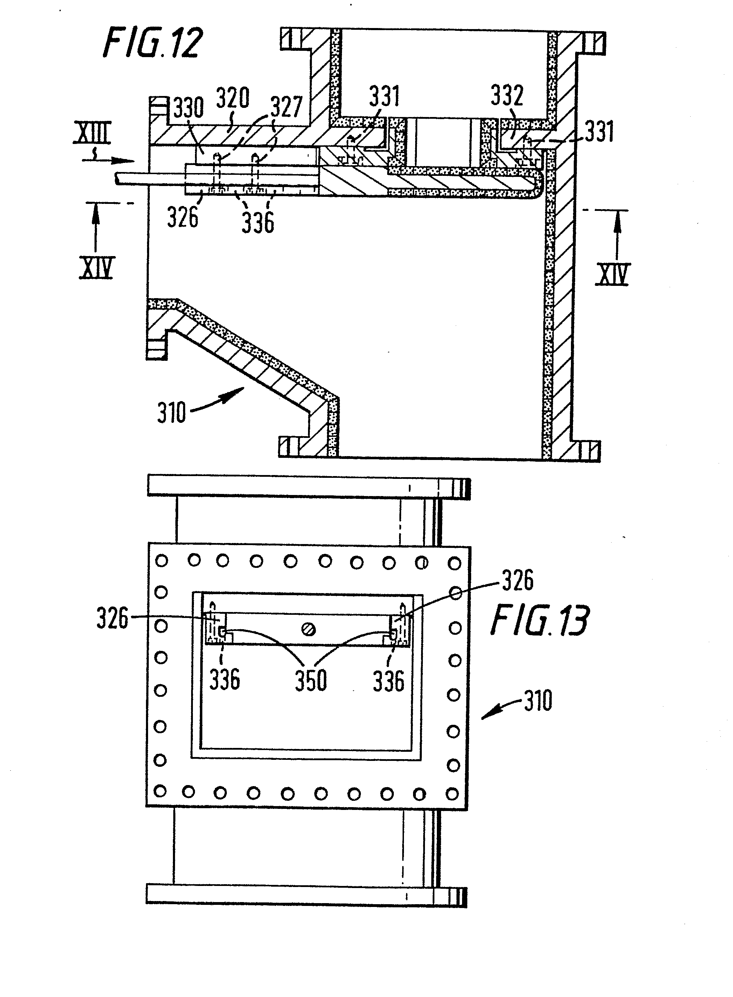

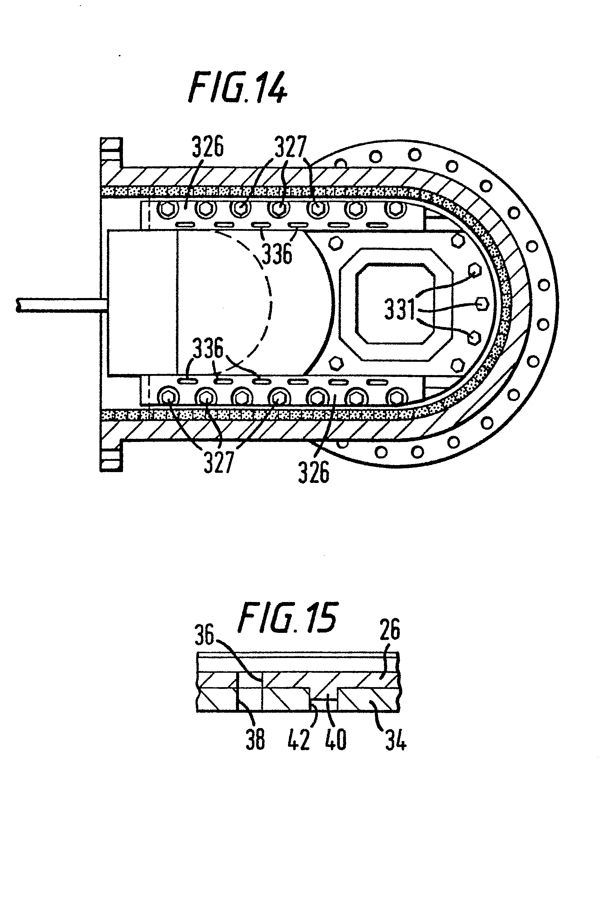

The slide valve 310 shown in Figures 12 to 14 has a removable guide and orifice plate assembly that includes valve guides 326 and an extended orifice plate 330. Once the valve guides 326 have been bolted to the orifice plate 330 with bolts 327 the complete assembly can be installed in the valve 310 as a unit through the bonnet 320 and bolted to the internal rim 332 by bolts 331. The unit may also be bolted to the bonnet 320 if desired. Each valve guide 326 has a recess 350 which communicates with a series of slots 336 through which particulates can fall.

Claims:

1.    A slide valve (10,110,210,310) having an inlet (12,112,212,312), an outlet (16,116,216,316) and a valve disc (24,124,224,324) slidably mounted on valve guides (26,126,226,326), characterised in that at least one of said valve guides (26,126,226,326) is provided with at least one slot (36,136,236,336) through which particulate material can fall when said valve is in use.

2.    A slide valve as claimed in Claim 1, characterised in that said valve guide (26,126,226,326) comprises a recess (50,150,250,350) and said slot (36,136,236,336) opens into said recess (50,150,250,350).

3.    A slide valve as claimed in Claim 1 or 2, characterised in that said slot (36,136,236,336) extends straight through said valve guide (26,126,226,326).

4.    A slide valve as claimed in Claim 1,2 or 3, characterised in that said valve guide (26,126,226,326) is a continuous integral single member.

5.    A slide valve as claimed in Claim 1,2,3 or 4, characterised in that at least those portions of said valve guide (26,126,226,326) which slidably receive said valve disc (24,124,224,324) are protected with hardfacing material.

6.    A slide valve according to any preceding Claim, including a shelf (34) supporting said said valve guide (26).

7.    A slide valve according to Claim 6, wherein said shelf (34) is provided with at least one slot (38) so disposed that particulate material can pass through said valve guide (26) and said shelf (34).

8.    A slide valve according to Claim 6 or 7, characterised in that said valve guide (26) is provided with an indexing tang (40) which locates said valve guide (26) relative to said shelf (34).

2

0237244

9.    A slide valve according to Claim 8, characterised in that said valve guide (26) is located on said shelf (34) solely by said indexing tang (40).

10.    A valve guide (26,126,226,326) for guiding a valve disc (24,124,224,324), characterised in that it comprises at least one slot (36,136,236,336) through which particulate material can fall when said valve guide (26,126,226,326) is in use.

*FIG.1*

FIG.2

FIG.3

## FIG.4

## FIG.5

4/8

0237244

*FIG.6*

*FIG.7*

FIG.8

FIG.9

FIG.10

224

227

227

226

226

210

220

236

210

FIG.11

227

226

236

224

226

236

227

0237244

FIG.12

330  320  327  331  332

XIII

331

326  336

XIV

XIV

310

326

326

FIG.13

336  350  336

310

## FIG.14

## FIG.15